# EUROPÄISCHE PATENTSCHRIFT

(11) **EP 0 780 286 B1**
(45) Veröffentlichungstag und Bekanntmachung des Hinweises auf die Patenterteilung: **22.09.1999**
(21) Anmeldenummer: 96120125.8
(22) Anmeldetag: 14.12.1996
(51) Int. Cl.: B62D 29/00, B62D 25/08, B62D 21/07

(54) **Trägeranordnung**
Beam member
Elément de poutre

(30) Priorität: 18.12.1995 DE 19547241
(43) Veröffentlichungstag der Anmeldung: 25.06.1997
(73) Patentinhaber: Bayerische Motoren Werke Aktiengesellschaft, 80788 München (DE); NORSK HYDRO A/S, 0240 Oslo 2 (NO)
(72) Erfinder: Lechermann, Günther, 85120 Hepberg (DE); Brunner, Peter, 85229 Markt Indersdorf (DE); Clausen, Edvin List, 6270 Toender (DK)
(74) Vertreter: Dexheimer, Rolf

(56) Entgegenhaltungen:
- WO-A-94/19227
- DE-A- 4 407 501
- DE-C- 642 861
- US-A- 2 174 915
- PATENT ABSTRACTS OF JAPAN vol. 8, no. 160 (M-312) [1597] , 25.Juli 1984 & JP 59 057072 A (HINO), 2.April 1984,

## Beschreibung

Die Erfindung bezieht sich auf eine Trägeranordnung nach dem Oberbegriff des Anspruchs 1.

Aus der US-PS 3,088,750 ist eine derartige Trägeranordnung bekannt. Sie weist vordere und hintere Längsträger auf, die jeweils über Querträger mit den seitlichen Längsträgern des Fahrzeugrahmens verbunden sind.

Aufgabe der Erfindung ist es, die Belastbarkeit der bekannten Trägeranordnung zu verbessern.

Diese Aufgabe wird durch die Merkmale des Anspruchs 1 gelöst.
Der Eckverbinder schafft einen weiteren Lastpfad (zusätzlich zum Querträger), über den Längskräfte vom ersten in den zweiten Längsträger eingeleitet werden. Hierdurch wird die Biegebeanspruchung des Querträgers deutlich reduziert. Der Eckverbinder stützt den Querträger in exakt dem Bereich, in dem die Kraft über den ersten Längsträger eingeleitet wird. Somit wird eine direkte Kraftübertragung ohne Biege- und Scherkraftbeanspruchung erreicht, da die Wände des Eckverbinders den Kraftfluß vom ersten Längsträger zum zweiten Längsträger in direkter Linie fortsetzen. Die Wände verlaufen dabei vorzugsweise unter einem Winkel von ca. 30 bis 60° zum Querträger. Der Eckverbinder läßt sich in besonders einfacher Weise zwischen Quer- und Längsträger einsetzen und kann durch alle bekannten Verbindungstechniken befestigt werden.
Durch die Erfindung wird die Belastbarkeit der Trägeranordnung erhöht, vor allem bei stoßartiger Belastung, wie zum Beispiel bei einem Fahrzeugcrash.

Die Erfindung erstreckt sich sinngemäß selbstverständlich auch auf solche Fahrzeugrahmen, bei denen über einen Träger eine Kraft in Fahrzeugquerrichtung eingeleitet wird.

Eckverbinder an sich sind zwar beispielsweise aus der Figur 3 der DE 44 07 501 A1 bekannt. Eine Krafteinleitung über einen weiteren Längsträger und die Abstützung dieser Kraft über in Lastrichtung verlaufende Wände ist jedoch nicht beschrieben. Vielmehr verlaufen die schraffiert dargestellten Innenwände des bekannten Eckverbinders quer zur Lastrichtung.

Bei der Ausgestaltung der Erfindung nach Anspruch 2 grenzt der Eckverbinder so an den Querträger an, daß wenigstens ein Teil der Wände des Eckverbinders den Verlauf der Wände des ersten Längsträgers fortsetzt. Hierdurch wird der Querträger im Bereich der unmittelbaren Krafteinleitungsstelle gestützt und eine Kraftübertragung ohne nennenswerte Scherkraftbeanspruchung des Querträgers erreicht. Ein Eindrücken oder gar Durchdrücken derjenigen Wand des Querträgers, an der der erste Längsträger anliegt (kritisch insbesondere bei einer stoßartigen Krafteinleitung über den ersten Längsträger), kann somit zuverlässig verhindert werden.

Um bei einem Hohlprofil, in das quer oder schräg zur Profilrichtung eine Kraft eingeleitetet wird, ein Zusammendrücken des Profilhohlraums zu vermeiden, ist gemäß Anspruch 3 eine Öffnung im Profilquerschnitt vorgesehen, durch die der Eckverbinder eingesteckt und direkt an die der Krafteinleitungsstelle abgewandte Wandseite des Querträgers angelegt werden kann. Hierdurch wird die dem ersten Längsträger zugewandte Profilaußenseite des Querträgers durch den Eckverbinder unmittelbar abgestützt.
Besondere Vorteile ergeben sich, wenn die Hohlprofile im Strangpreßverfahren hergestellt werden. Mit derartigen Strangprofilen, beispielsweise aus Aluminiumlegierungen, können Fahrzeugrahmen in kleinen Stückzahlen kostengünstig hergestellt werden. Ziel bei der Konstruktion derartiger Leichtmetall-Trägeranordnungen ist es, möglichst wenige Zusatzbauteile, wie z. B. Verbindungsknoten, zu verwenden, um die Herstell- und Montagekosten niedrig zu halten. Die Belastbarkeit von Trägeranordnungen aus Strangprofilen, die stumpf aufeinanderstoßen, kann durch die Erfindung entscheidend verbessert werden. Gleichzeitig kann die Wandstärke derjenigen Profilwände reduziert werden, die durch eine stützende Wand des Eckverbinders entlastet werden. Hierdurch ergeben sich Kosten- und Gewichtsvorteile.
Selbstverständlich können zur Realisierung der Erfindung auch offene (Strang)Profile eingesetzt werden.

Bei der Ausführung der Erfindung nach Anspruch 4 werden im rechteckförmigen Querträger durch den eingesetzten Eckverbinder quasi Schottwände geschaffen, die das Hohlprofil des Querträgers überbrücken. Der Querträger ist an seinem Endabschnitt schräg beschnitten, um ein Einbringen des Eckverbinders zu ermöglichen.

Auch der Eckverbinder kann gemäß Anspruch 5 in vorteilhafter Weise als (Hohlkammer)Strangprofil ausgebildet sein. Der Wandabstand des Strangprofils ist dabei auf den Abstand der krafteinleitenden Wände des ersten Längsträgers abzustimmen. Der erfindungsgemäße Eckverbinder besitzt eine hohe Steifigkeit und ist kostengünstig in der Herstellung. Er kann für den jeweiligen Anwendungsfall auf die erforderliche Länge und die entsprechenden Anschlußwinkel abgeschnitten werden. Die Herstellrichtung des Profils, aus dem der Eckverbinder gebildet wird, stimmt mit der Richtung der zu übertragenden Kraft überein, wodurch sich eine hohe Belastbarkeit ergibt.

Bei der Weiterbildung der Erfindung nach Anspruch 6 ergibt sich durch die zusätzlichen Trennwände im Inneren des Eckverbinders eine besonders gute Abstützung des ersten Längsträgers. Besondere Vorteile werden dann erzielt, wenn auch der erste Längsträger von einem Mehrkammer-Hohlprofil gebildet wird. In diesem Fall können mit einem Eckverbinder nach Anspruch 6 mit entsprechend abgestimmtem Abstand der Kammerwände alle Wände eines Mehrkammer- Längsträgers in ihrem Verlauf fortgesetzt werden.

Anspruch 7 beschreibt eine mögliche Anwendung der Erfindung bei Fahrzeugen. Bei einem Fahrzeugcrash werden die Längskräfte in den vorderen bzw. hinteren Längsträgern in besonders vorteilhafter Weise über die Eckverbinder in die Schweller weitergeleitet. Selbstverständlich kann die Erfindung auch in anderen Teilbereichen der Tragstruktur eines Fahrzeugs eingesetzt werden. Generell ist die Anwendung der Erfindung nicht auf Fahrzeuge beschränkt.

Mögliche Ausführungsbeispiele der Erfindung sind in der Zeichnung nachfolgend näher dargestellt und erläutert. Es zeigt:
- Figur 1: ein erstes Ausführungsbeispiel einer erfindungsgemäßen Trägeranordnung in schematisierter Draufsicht,
- Figur 2: ein zweites Ausführungsbeispiel einer Trägeranordnung in der Draufsicht,
- Figur 3: eine Schnittdarstellung gemäß der Schnittverlaufslinie III - III in Figur 2 und
- Figur 4: eine Seitenansicht der Trägeranordnung von Figur 2.

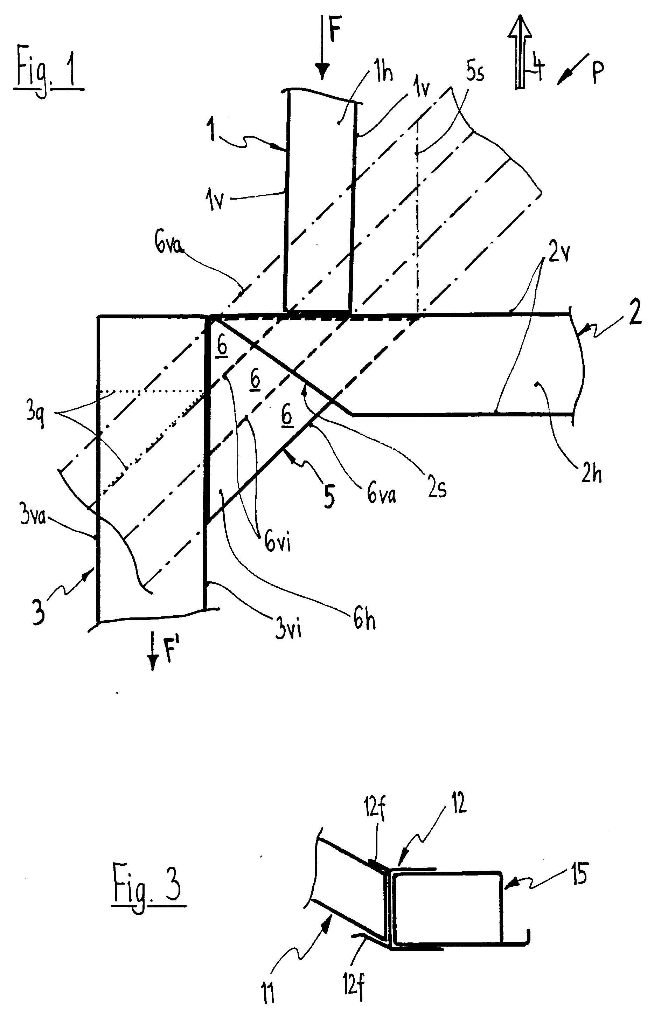

Figur 1 zeigt eine Trägeranordnung, wie sie beispielsweise im vorderen Bereich eines Kraftfahrzeuges zu finden ist. Die Trägeranordnung weist je Fahrzeugseite (nur linke Fahrzeugseite dargestellt; der Pfeil 4 kennzeichnet die Fahrtrichtung) einen vorderen Längsträger 1, einen Querträger 2 sowie einen seitlichen Längsträger 3 auf. Der vordere Längsträger 1 ist beispielsweise als Motorlängsträger ausgebildet und dient der Einleitung von Kräften bei einem Fahrzeugcrash. Der seitliche Längsträger 3 wird üblicherweise als Schweller bezeichnet. Die beiden Längsträger 1 und 3 sind im Querschnitt rechteckförmig. Auch der Querträger 2 ist als Rechteckprofil ausgebildet, mit zwei horizontal verlaufenden Wänden 2h und zwei vertikal verlaufenden Wänden 2v. Alternativ kann der Querträger 2 auch als entgegen der Fahrtrichtung 4 offenes U-Profil ausgebildet sein.
Längs- und Querträger 1 bzw. 2 sind gleich hoch, so daß die horizontalen Wände 1h des Längsträgers 1 in den Wänden 2h des Querträgers 2 ihre Fortsetzung finden, wodurch eine gute Kraftabstützung gegeben ist.

Die vertikalen Wände 1v des Längsträgers 1 treffen auf die vordere Wand 2v des Querträgers 2. Zwischen die Längsträger 1 und 3 ist zur Abstützung ein Profil 5 eingesetzt, das als dreieckförmiger Eckverbinder ausgebildet ist. Der Eckverbinder 5 ist zwischen die beiden Wände 2h des Querträgers 2 eingeschoben, was durch einen schrägen Beschnitt entlang der Schnittkante 2s ermöglicht wird. Der Eckverbinder 5 selbst ist als Mehrkammer-Hohlprofil mit drei Kammern 6 ausgebildet, die jeweils einen rechteckförmigen Querschnitt aufweisen. Die Kammern 6 werden von äußeren vertikalen Begrenzungswänden 6va, inneren vertikalen Stützwänden 6vi sowie horizontalen Wänden 6h begrenzt. Der Eckverbinder 5 ist als Strangprofil ausgebildet mit einem insgesamt rechteckförmigen Querschnitt. Die Herstellrichtung (Strangpreßrichtung) für das Profil 5 ist mit dem Pfeil P bezeichnet und verläuft in Richtung der Wände 6vi, 6va. In der vorliegenden Trägeranordnung wurde der Eckverbinder 5 unter 45° vom ursprünglichen Strangprofil abgeschnitten, dessen Verlauf durch die strichlierten Linien in Figur 1 wiedergegeben ist. Die zusätzlich in Figur 1 eingezeichnete Schnittlinie 5s gibt an, wie aus einem durchgehenden Strangprofil ohne Verschnitt weitere Eckverbinder hergestellt werden können. Selbstverständlich können Eckverbinder auch unter einem von 45° abweichenden Winkel eingesetzt werden, wobei derartige asymmetrische Eckverbinder bei Profilen mit symmetrischem Querschnitt ebenfalls ohne Verschnitt hergestellt werden können.

Bei Einleitung einer Kraft F wirken die inneren Stützwände 6vi als Schottwände, die die Kraft F an den seitlichen Längsträger 3 weiterleiten. Die Stützwände 6vi 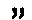 hinterfüttern" dabei die nicht abgestützten vertikalen Wände 1v des vorderen Längsträgers 1. Der Pfeil F' kennzeichnet den Kraftanteil, den der seitliche Längsträger 3 übernimmt. Die Kraft F' wird in die innere vertikale Wand 3vi des seitlichen Längsträgers 3 eingeleitet. Zusätzlich können im Inneren des Längsträgers 3 quer oder schräg zur Fahrtrichtung verlaufende Schottwände 3q (in Figur 1 punktiert dargestellt) vorgesehen sein, die den Verlauf der Wände 6vi (und gegebenenfalls der Wände 6va) bis an die äußere vertikale Wand 3va des Längsträgers 3 fortsetzen. Ebenso könnte der Längsträger 3 analog dem Querträger 2 endseitig schräg beschnitten sein, um ein Einstecken des Eckverbinders 5 in das Hohlprofil des Längsträgers 3 zu ermöglichen, mit direkter Anlage des Eckverbinders 5 an der Wand 3va des Längsträgers 3. Bei einem nach innen offenen U-Profil des seitlichen Längsträgers 3 würde der Eckverbinder 5 ebenfalls bis an die äußere vertikale Wand 3va des Längsträgers 3 reichen.

Durch die erfindungsgemäße Trägeranordnung erfolgt ein Kraftfluß vom Längsträger 1 über den Querträger 2 und den Eckverbinder 5 auf den Längsträger 3, zusätzlich zur direkten Kraftübertragung zwischen Querträger 2 und Längsträger 3. Hiermit ist ein hohes Maß an Kraftübertragung vom vorderen in den mittleren und hinteren Bereich der Fahrzeugkarosserie gegeben. Im Bereich der vorderen Wand 2v des Querträgers kann keine undefinierte Bauteilverformung einsetzen. Andere Verstärkungsmaßnahmen, wie z. B. flächig aufgesetzte Verstärkungsbleche oder eigens anzufertigende Knotenverbinder, können hiermit entfallen. Außerdem kann die Wandstärke der Wand 2v reduziert werden. Somit ergibt sich eine Gewichtsreduzierung und eine Kostensenkung bei der Herstellung einer erfindungsgemäßen Trägeranordnung, was sich insbesondere sehr vorteilhaft bei in Kleinserien angefertigten Rahmen aus Strangprofilen für Kraftfahrzeuge auswirkt.

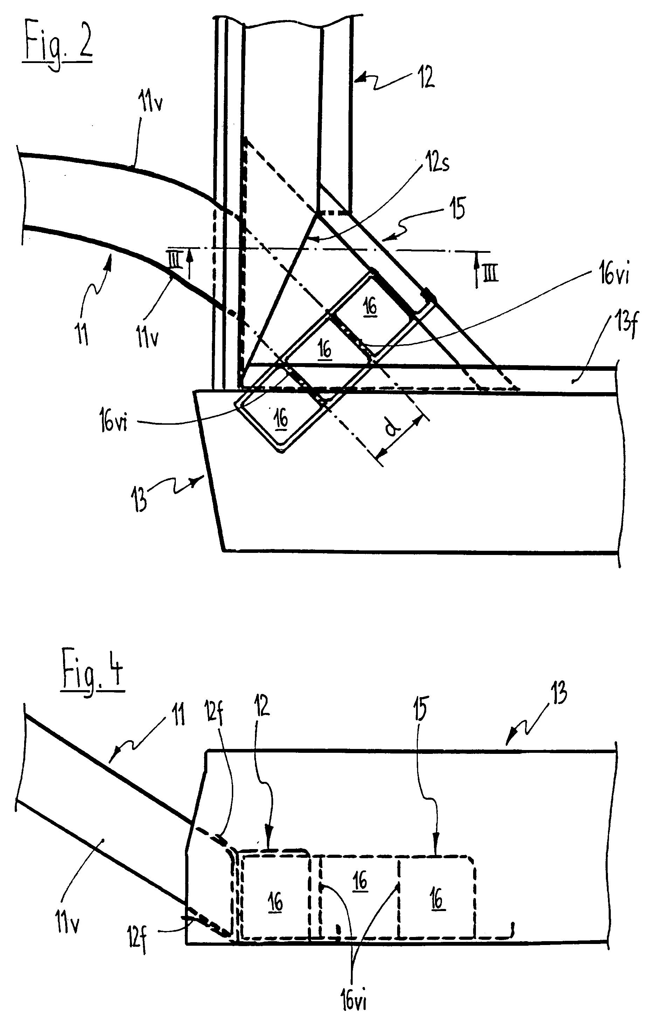

Die Figuren 2 bis 4 zeigen ein zweites Ausführungsbeispiel der Erfindung. Ein im Querschnitt etwa rechteckförmiger Motorträger 11 greift in die Aufnahmeflansche 12f eines Querträgers 12 ein. Der Querträger 12 ist über einen Eckverbinder 15 mit einem Schweller 13 verbunden. Der Eckverbinder 15 ist als Mehrkammer-Hohlprofil ausgebildet. In Figur 2 ist der Querschnitt des Hohlkammerprofils 15 zur Verdeutlichung in die Zeichenebene geklappt. Das eine Ende des Eckverbinders 15 ist über eine Öffnung mit schrägem Beschnitt 12s in den fahrtrichtungsabgewandten Abschnitt des Querträgers 12 eingesetzt, während sein anderes Ende in einen Flansch 13f des Schwellers 13 eingreift. Der Eckverbinder 15 weist drei Kammern 16 auf, die durch Schottwände 16vi unterteilt sind. Der Abstand d der Schottwände 16vi ist unter Berücksichtigung des Winkels, unter dem der Eckverbinder 15 eingesetzt ist, auf den Abstand der beiden vertikalen Wände 11v des Motorträgers 11 abgestimmt. Damit ergeben sich die bereits oben genannten Vorteile eines durchgehenden Kraftflusses vom Motorträger 11 über den Querträger 12 und den Eckverbinder 15 auf den Schweller 13.

Die einzelnen Elemente 11, 12, 13 und 15 der erfindungsgemäßen Trägeranordnung sind so gestaltet und dimensioniert, daß sie nach entsprechendem Beschnitt ineinandergesteckt werden können. Dadurch ergibt sich eine form- bzw. kraftschlüssige Verbindung. Die einzelnen Elemente können zum Toleranzausgleich gegeneinander verschoben werden, bevor sie z. B. miteinander verschweißt werden. Hierdurch kann eine gleichbleibende Schweißspaltbreite erzielt werden. Anstelle des Beschneidens können einzelne oder mehrere Elemente auch durch Bearbeitung mit einem Fräswerkzeug ihre Paßform erhalten.

Die Verbindung der einzelnen Elemente untereinander ist durch alle bekannten Verbindungstechniken wie Schweißen, Nieten, Clinchen, Schrauben oder Kleben möglich. Durch den Formschluß zwischen den einzelnen Elementen ergibt sich ein optimaler Kraftfluß. Durch schräge Beschnitte kann die Schweißnahtlänge erhöht werden, um den Festigkeitsabfall in der Schweißnaht, der bei Aluminiumlegierungen bis zu 60 % betragen kann, auszugleichen. Durch das Ineinanderstecken der einzelnen Elemente erübrigt sich die Verwendung von Zusatzbauteilen wie Gußknoten oder Knotenblechen, so daß sowohl die Material- als auch die Montagekosten gesenkt werden können.

## Patentansprüche

1. Trägeranordnung eines Fahrzeugrahmens, mit etwa in Fahrzeuglängsrichtung verlaufenden ersten und zweiten Längsträgern, die gegeneinander versetzt sind und über wenigstens einen etwa quer zur Fahrtrichtung verlaufenden Querträger miteinander verbunden sind,
dadurch gekennzeichnet, daß zwischen Querträger (2; 12) und zweitem Längsträger (3, 13) ein Eckverbinder (5, 15) eingesetzt ist, der sich vom Verbindungsbereich des ersten Längsträgers (1, 11) mit dem Querträger (2, 12) einerseits bis zum zweiten Längsträger (3, 13) andererseits erstreckt, wobei die Wände (6vi, 6va, 16vi, 16va) des Eckverbinders (5, 15) in Richtung des Kraftflusses zwischen dem Verbindungsbereich und dem zweitem Längsträger (3, 13) verlaufen.

2. Trägeranordnung nach Anspruch 1,
dadurch gekennzeichnet, daß wenigstens eine Wand (6vi; 16vi) des Eckverbinders (5, 15) den Verlauf wenigstens einer der Wände (1v; 11v) des ersten Längsträgers (1; 11) fortsetzt.

3. Trägeranordnung nach Anspruch 1 und/oder 2,
dadurch gekennzeichnet, daß der Querträger (2, 12) und gegebenenfalls auch der zweite Längsträger (3, 13) von Hohlprofilen gebildet werden und zumindest der Querträger (2, 12) mit einer Öffnung versehen ist, in die der Eckverbinder (5, 15) einsetzbar ist.

4. Trägeranordnung nach Anspruch 3,
dadurch gekennzeichnet, daß der Querträger (2, 12) von einem schräg beschnittenen Rechteckprofil gebildet wird.

5. Trägeranordnung nach einem der vorangegangenen Ansprüche,
dadurch gekennzeichnet, daß der Eckverbinder (5, 15) von einem Strangprofil gebildet wird, dessen Wände (6vi, 6va; 16vi, 16va) in Strangpreßrichtung (P) verlaufen.

6. Trägeranordnung nach Anspruch 5,
dadurch gekennzeichnet, daß der Eckverbinder (5, 15) ein Mehrkammer-Hohlprofil ist, dessen äußere Begrenzungswände und/oder dessen innenliegende Trennwände (6vi, 16vi) den Verlauf wenigstens einer der Wände (1v, 11v) des ersten Längsträgers (1, 11) fortsetzen.

7. Trägeranordnung nach einem der vorangegangenen Ansprüche,
dadurch gekennzeichnet, daß der erste Längsträger (11) als vorderer oder hinterer Längsträger und der zweite Längsträger (3, 13) als Schweller eines Fahrzeugrahmens ausgebildet sind.

## Claims

1. A carrier arrangement of a vehicle, with first and second longitudinal bearers running somewhat in the direction of the vehicle long axis, which are displaced from each other and joined together via at least one cross bearer running somewhat at right angles to the direction of travel,
characterised in that between the cross bearers (2; 12) and the second longitudinal bearer (3, 13) a corner connector (5, 15) is inserted, which extends from the joining region of the first longitudinal bearer (1, 11) with the cross bearer (2, 12) on the one hand, up to the second longitudinal bearer (3, 13) on the other, whereby the walls (6vi, 6va, 16vi, 16va) of the corner connector (5, 15) run in the direction of the force flow between the joining region and the second longitudinal bearer (3, 13).

2. A carrier arrangement according to Claim 1,
characterised in that at least one wall (6vi, 16vi) of the corner connector (5, 15) continues the run of at least one of the walls (1v; 11v) of the first longitudinal bearer (1; 11).

3. A carrier arrangement according to Claim 1 and/or Claim 2,
characterised in that the cross bearer (2, 12) and possibly also the second longitudinal bearer (3, 13) are formed from hollow profiles and at least the cross bearer (2, 12) is provided with an opening, into which the corner connector (5, 15) can be inserted.

4. A carrier arrangement according to Claim 3,
characterised in that the cross bearer (2, 12) is formed from a rectangular profile cut at an angle.

5. A carrier arrangement according to one of the foregoing Claims,
characterised in that the corner connector (5, 15) is formed from an extruded profile, whose walls (6vi, 6va; 16vi, 16va) run in the direction of the extrusion pressing (P).

6. A carrier arrangement according to Claim 5,
characterised in that the corner connector (5, 15) is a multi-chamber hollow profile, whose outer bordering walls and/or its inner separating walls (6vi, 16vi) continue at least one of the walls (1v, 11v) of the first longitudinal bearer (1, 11).

7. A carrier arrangement according to one of the foregoing Claims,
characterised in that the first longitudinal bearer (11) is constructed as the front or rear longitudinal bearer and the second longitudinal bearer (3, 13) as the sill of a vehicle chassis.

## Revendications

1. Dispositif de poutre pour un châssis de véhicule, comportant une première et une seconde poutres longitudinales dirigées sensiblement dans la direction longitudinale du véhicule, ces poutres étant décalées et reliées par au moins une poutre transversale par rapport à la direction de déplacement,
caractérisé en ce qu'
entre les poutres transversales (2, 12) et les secondes poutres longitudinales (3, 13), on a un connecteur d'angle (5, 15) qui s'étend de la première zone de liaison de la première poutre longitudinale (1, 11) à la poutre transversale (2, 12), jusqu'à la seconde poutre longitudinale (3, 13), les parois (6vi, 6va, 16vi, 16va) du connecteur d'angle (5, 15) étant dirigées dans la direction du flux des forces entre la zone de liaison et la seconde poutre longitudinale (3, 13).

2. Dispositif de poutre selon la revendication 1,
caractérisé en ce qu'
au moins une paroi (6vi ; 16vi) du connecteur d'angle (5, 15) prolonge le tracé d'au moins l'une des parois (1v ; 11v) de la première poutre longitudinale (1 ; 11).

3. Dispositif de poutre selon l'une des revendications 1 et/ou 2,
caractérisé en ce que
la poutre transversale (2, 12) et le cas échéant également la seconde poutre longitudinale (3, 13), sont formées par des profils creux, et au moins la poutre transversale (2, 12) comporte une ouverture dans laquelle s'engage le connecteur d'angle (5, 15).

4. Dispositif de poutre selon la revendication 3,
caractérisé en ce que
la poutre transversale (2, 12) est formée d'un profil rectangulaire coupé en biais.

5. Dispositif de poutre selon l'une des revendications précédentes,
caractérisé en ce que
le connecteur d'angle (5, 15) est un profil extrudé dont les parois (6vi, 6va ; 16vi, 16va) sont dirigées dans la direction d'extrusion (P).

6. Dispositif de poutre selon la revendication 5,
caractérisé en ce que
le connecteur d'angle (5, 15) est un profil creux à plusieurs chambres dont les parois limites extérieures et/ou les parois de séparation intérieures (6vi, 16vi) prolongent le tracé d'au moins l'une des parois (1v, 11v) de la première poutre longitudinale (1, 11).

7. Dispositif de poutre selon l'une quelconque des revendications précédentes,
caractérisé en ce que
la première poutre longitudinale (11) est la poutre longitudinale avant ou arrière, et la seconde poutre longitudinale (3, 13) est la poutre de seuil, d'un châssis de véhicule automobile.
